# EUROPEAN PATENT APPLICATION

(11) **EP 2 767 822 A1**
(43) Date of publication of application: **20.08.2014**
(21) Application number: 13155794.4
(22) Date of filing: 19.02.2013
(51) Int. Cl.: G01N 21/64, B01L 3/00, H01L 31/101

(54) **Point-of-care testing device and reader**

(71) Applicant: CSEM Centre Suisse d'Electronique et de Microtechnique SA - Recherche et Développement, 2002 Neuchâtel (CH)
(72) Inventor: Leuenberger, David, 4057 Basel (CH); Adsul, Neeraj, 4057 Basel (CH); Nisato, Giovanni, 4125 Riehen (CH)
(74) Representative: Schneider Feldmann AG Patent- und Markenanwälte

(57) **Abstract**

A point-of-care testing device (0), comprising a detector module (1), a microfluidic chip (2) and a light source module (3) in a sandwich geometry, while light of the light source module (3) can be emitted from an excitation side (S), passing the microfluidic chip (2) and finally entering the detector module (1) at a detector side (D), should be improved to reach a low-cost disposable point-of-care testing device (0) for fluorescent detection systems, where excitation light is reproducible blocked from entering the detector module (1), in order to avoid leakage light, additionally avoiding use of sophisticated and expensive light source modules (3) and detector modules (1). The solution is a point-of-care testing device (0) where the light source module (3) comprises at least one optical short-pass filter (SP) facing a first surface of the microfluidic chip (2) on the excitation side (S) and the detector module (1) comprises at least one optical long-pass filter (LP) facing a second surface of the microfluidic chip (2) on the detector side (D).

## Description

### TECHNICAL FIELD

The present invention describes a point-of-care testing device, comprising a detector module, a microfluidic chip and a light source module in a sandwich geometry, while light of the light source module can be emitted from an excitation side, passing the microfluidic chip and finally entering the detector module at a detector side as well as a reader with an integrated point-of-care testing device and the use of the point-of-care testing device in a reader.

### STATE OF THE ART

Point-of-care applications or testing (POCT) is a strong growing field for medical testing of a wide range of diseases, which is carried out at or near the site of patient care. POCT can be performed by professionals in hospitals, physician offices, clinics and other patient care sites, in a hospital or lab care. Beside the use of POCT by professionals in remote sites, as for example in the case of virus and bacteria screening, when pandemics is occurring, devices for POCT can be used by patients themselves. The self-testing, even referred as over-the-counter (OTC) applications, typically targeted at the monitoring of chronical diseases, which can be easily performed by patients. For example blood glucose testing, electrolyte analysis, hemoglobin diagnostics and infectious disease testing are implemented with portable and handheld devices.

The main advantage is the accelerated receipt of results by bringing the device to the patient.

The general trend for commercial use of POCT devices shows increasing needs of personalized care diagnostics tools and the aim to progressive move from hospitals and lab care centers toward more general Points of Care sites such as general practitioners and even patients themselves. For reaching an exhaustive spread of POCT devices the miniaturization of the diagnostic tools, enabling compact and / or portable devices is enhanced.

To date Microfluidic- or Lab-on-a-Chip-devices have not been well suited to point-of-care applications. Although the chips themselves are cheap and small, they must generally be used in conjunction with bulky optical light-sources and detectors. The lack of an integrated, versatile detection scheme is a major obstacle to the deployment of portable diagnostic devices. It is desirable to avoid laboratory based equipment in order to create mobile Point-of-care testing devices. The common used measurement technique is an optical or more precisely a fluorescent or phosphorescent measurement. Due to the fact, that incident excitation light and fluorescence emission from a detector chamber have to be separated from each other, most devices need bulky optical components.

Recently developed in-line detection systems, where light source, detection chamber and detector are sharing one optical path still have unsolved disadvantages.

In WO2010100408 the problem of elimination of incident light after passing the assay material to avoid stray light from the source into the detector was approached. The optical arrangement comprises along one common optical axis a light source and two sets of linear and reflective polarizers, whereat the polarization directions of the different polarizer have to be exactly tuned. The assay material is covered by walls of an optical transparent material, building a detector chamber and the sets of polarizers are placed in connection to the light source respectively to the detector, where gaps between the sets of polarizers and the walls of the detector chamber are visible. The probe light is partly reflected by the reflective polarizer, which leads to further fluorescence and therefore to improved detector signals. A compact measurement device is achieved.

A drawback of the mentioned crossed-polarizer configuration is in relation to the accuracy of alignment required for the polarizers. A small degree of misalignment results in a significant increase in light leakage, i.e. light from the source that cannot be filtered out and which saturates the detector. For example a 2 degree misalignment yields a three-fold increase in light leakage.

According to WO2011043771 the use of polarizers for splitting incident light and fluorescence light has the additional drawback that the polarizers are absorbing an amount of light, which results in a decreased detection sensitivity. WO2011043771 discloses a straight type sensor comprising, a micro channel for receiving a target therein, said micro channel having a light input side and a light output side opposite to the light input side; a light source disposed on the light input side of the micro channel; and a photo detector disposed on the light output side of the micro channel, wherein the light source is constituted by a layer of an organic light emitting diode (OLED).

An essential feature of fluorescent detection systems in general is that the fluorescent markers in the detection chamber are excited by a maximum number of photons from the light source and that the resulting fluorescence/phosphorescence emission is collected with maximum efficiency by the detection system.

The maximum excitation is ensured by a directional light-source that is brought as close as possible to the marker molecules and that is perfectly aligned to the detection chamber. The maximum detection efficiency of typically isotropic emission is ensured by bringing the detector in as close proximity as possible and align it with respect to the detection chamber.

For improvement of detection sensitivity WO2011043771 uses a compact layer design, with aligned light source, detection chamber and detector and using a special OLED as light source generating a narrow band emission. Thin-film fabrication methods are used to yield aligned layer, which are attached using a transparent adhesive sheet. For further improvement WO2011043771 states the use of a color filter to filter out the narrow band-emission from the OLED.

Some of the state of the art publications mention about using organic light emitting diodes (OLEDs) as light source and organic photodiode (OPD) or organic photovoltaic (OPV) devices as light detectors. The main drawback is their limited lifetime due to the impact of oxygen and water. Protection by encapsulation is, in principle, possible, but adds to complexity and costs and often leads to larger form factors due to the required packaging.

### DESCRIPTION OF THE INVENTION

The object of the present invention is to create low-cost disposable point-of-care testing device for fluorescent detection systems, where excitation light is reproducibly blocked from entering the detector module, in order to avoid leakage light, additionally avoiding use of sophisticated and expensive light sources and detector modules.

To reach the goal of a cheap and disposable point-of-care testing device the architecture is mechanically and optically simple, but showing the required detection sensitivity.

An integrated reader device is created, comprising a point-of-care testing device, which is very easily used by any user.

The present invention relates to a compact architecture for low-cost disposable point-of-care devices including integrated optoelectronic and microfluidic elements. It is based on a head-on geometry where light-sources, optical filters, microfluidic window and light detectors are arranged in a linear fashion. The microfluidic chip consists of several measurement chambers that are transparent from the excitation side as well as the detection side. An array of thin light-sources suitable for integration together with a short-pass filter is placed on one side of the microfluidic chip and a long-pass filter and an array of thin light-detectors suitable for integration is situated on the opposite side of the microfluidic chip.

The key advantage in the presented invention is that light source and detector suitable for integration are mechanically bonded to the microfluidic chip and not part of an external reader. They can be properly aligned in a cost-effective way during the fabrication process. The alignment of the integrated device with the external electronic circuits of the reader, on the other hand, is uncritical if properly designed by a person skilled in the art. The invention relates to a mass-producible and disposable device which displays a solid performance without the use of expensive alignment systems.

The devices including integrated optoelectronic and microfluidic elements can be operated independently from complex laboratory preparation and analytical equipment. The target is a disposable device for monitoring various diseases such as cardiovascular diseases.

### BRIEF DESCRIPTION OF THE DRAWINGS

A preferred exemplary embodiment of the subject matter of the invention is described below in conjunction with the attached drawings.
- Figure 1: shows a schematic sectional view of one embodiment of the point-of-care testing device with a multilayer design, while
- Figure 2: shows a schematic top view of the microfluidic chip in the centre of the point-of-care testing device according figure 1.
- Figure 3: shows an embodiment of mask layout for the fabrication of LE-FET devices.
- Figure 4a: shows the spectral characteristics of an embodiment in the wavelength range from 400 nm to 800 nm, while
- Figure 4b: shows the spectral characteristics of the area where the short-pass filter (SP) and the long-pass filter (LP) transmission curves overlap in logarithmic scale.
- Figure 5: shows the different building blocks comprising the POCT system.
- Figure 6: shows a cross-section of one point-of-care testing device integrated in a holder, while
- Figures 7: are showing perspective views of the point-of-care testing device integrated in a holder, comprising a bottom part for excitation (figure 7a) and a top part for detection (figure 7b).

### DESCRIPTION

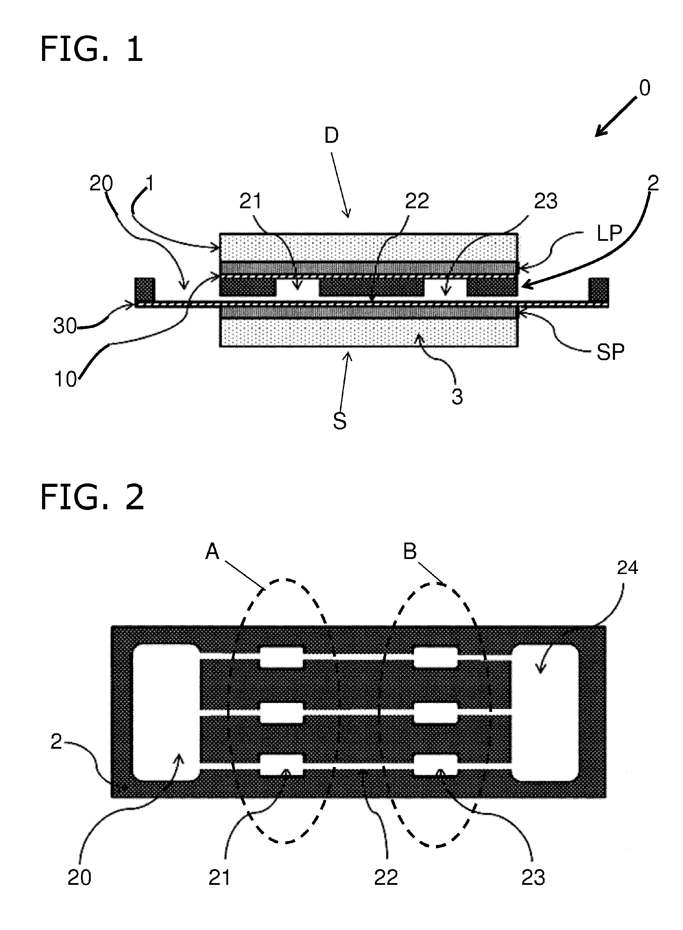

An embodiment of a point-of-care testing device 0 is displayed in Figure 1 with a excitation side S and a detector side D. It shows a very compact, generic, optical bio-sensing architecture, comprising a detector module 1, a microfluidic chip 2 and a light source module 3.

The microfluidic chip 2 comprises at least one fluidic channel 22 with several lanes and detection zones, where the microfluidic chip 2 is sandwiched between the detector module 1 and the light source module 3. The light source module 3 comprises an optical short-pass filter SP facing a first surface of the microfluidic chip 2 from the excitation side S. The detector module 1 comprises an optical long-pass filter LP facing a second surface of the microfluidic chip 2 from the detector side D.

The filters SP, LP are designed in such a way to have maximum and minimum transmission in the pass- and stop-band, respectively as well as very low auto-fluorescence. The short-pass filter SP and the long-pass filter LP can be monolithically integrated in the light source module 3 with an array of light sources and/or detector module 1 with an array of light detectors respectively. The long-pass filter LP works like a cut-off filter, letting pass the long-wave spectral components. While the short-pass filter SP works like a cut-in filter letting pass the short-wavelength spectral components.

The used long-pass and short-pass filters LP, SP have a sharp slope, which divides the transmission wavelength region from the absorption wavelength region. The spectral overlap between the transmission curve of SP and LP filter should be minimized. The absorbance or optical density of the used SP and LP filters should be minimum 6 in the long-wavelength and short-wavelength blocking range, respectively. In the pass-band the transmission of the used SP and LP filter should be above 50%.

In a preferred embodiment the absorbance or optical density of the used SP and LP filters should be 8 in the long-wavelength and short-wavelength blocking range, respectively. In the pass-band the transmission of the used SP and LP filter should be above 80%.

In a more preferred embodiment the absorbance or optical density of the used SP and LP filters should be 12 in the long-wavelength and short-wavelength blocking range, respectively. In the pass-band the transmission of the used SP and LP filter should be close to 100%.In the shown head-on geometry these elements are arranged in a layerwise linear fashion, where the light source module 3 and the detector module 1 are positioned in a gapless way relatively to the microfluidic chip 2 and directly or indirectly attached on the opposite surfaces of the microfluidic chip 2. Here the short-pass filter SP and the long-pass filter LP are placed on the first and second surface sealed on both sides by sealing tapes 31, 11.

Each of the at least one fluidic channels 22 contains at least one reference chamber 21 and at least one detection chamber 23. The fluidic channels 22 and the chambers 21, 23 are sealed from both sides with sealing tape 11, 31, to avoid pouring out of the liquid to be analysed.

The microfluidic chip 2 can either be passive, based on capillary force or active using external or integrated pumps and valves. A passive microfluidic chip 2 usually consists of a fluidic inlet 20 and outlet 24. Such microfluidic chips 2 made of plastic are typically manufactured by techniques compatible with mass production such as injection molding or hot-embossing.

As can be seen in figure 2 three fluidic channels 22, reference chambers 21 and detection chambers 23 are recessed. At least the reference chambers 21 and the detection chambers 23 are either transparent or semi-transparent to light.

On the bottom side or excitation side S of the point-of-care testing device 0 the short-pass filter SP and at least one light source or an array of light-sources, building the light source module 3 are located. The light source module 3 or the at least one light-source are located in the center of the reference chamber 21 and detection chambers 23 in a reference area A respectively in a detection area B.

In a preferred embodiment the light sources are flat area emitter with the emission directed vertically with respect to the substrate, building the light source module 3. The spectral characteristics of the light-source shall match the absorption spectrum of the fluorophores to be measured. The emission should not have any long wavelength tail that could overlap with the emission of the fluorophores and therefore cannot be filtered out.

In order to maximize the amount of light coupled into the detection chamber 23 in case of Lambertian emitters (e.g. organic light emitting diodes), and in order to compensate for alignment errors, the spot size of the light source or the array of light sources is slightly larger with respect to the cross-section area of the detection chamber 23. Typically the dimension of the spot size of the light source is increased by about 0.5 mm on each side with respect to the measurement window. The light sources for all reference chambers 21 and detection chambers 23 are integrated in a single substrate, building a part of the light source module 3.

The used light sources could either be two-terminal devices such as organic light-emitting diodes (OLEDs) or three terminal devices such as light-emitting transistors (LE-FETs). In case of an OLED the light-source array could have a common anode and individual cathodes. In case of LE-FETs the individual transistors may have common source and common gate, as well as individual drain connections. This helps to reduce the number of interconnects and the complexity of the point-of-care testing device 0. The light-sources shall be thin-film area emitter with high brightness.

On the upper side or detector side D of the point-of-care testing device 0 the long-pass filter LP and at least one light detector or an array of light-detectors, in form of the detector module 1 is arranged. The light-detectors are located in the center of each reference chamber 21 and detection chamber 23 facing the detection area B of the microfluidic chip 2 in order to maximize the amount of light collected from the reference and detection chamber 21, 23.

In order to collect as much of the isotropic flight emission from the fluorescent markers and in order to compensate for alignment errors, the size of the light source is slightly larger with respect to the cross-section area of the detection chamber 23. There is a trade-off between detection speed/dark noise and collection efficiency. Typically the dimension of the at least one light-detector or array of detectors is increased by about 0.5 mm on each side with respect to the cross-section area of the detection chamber 23.

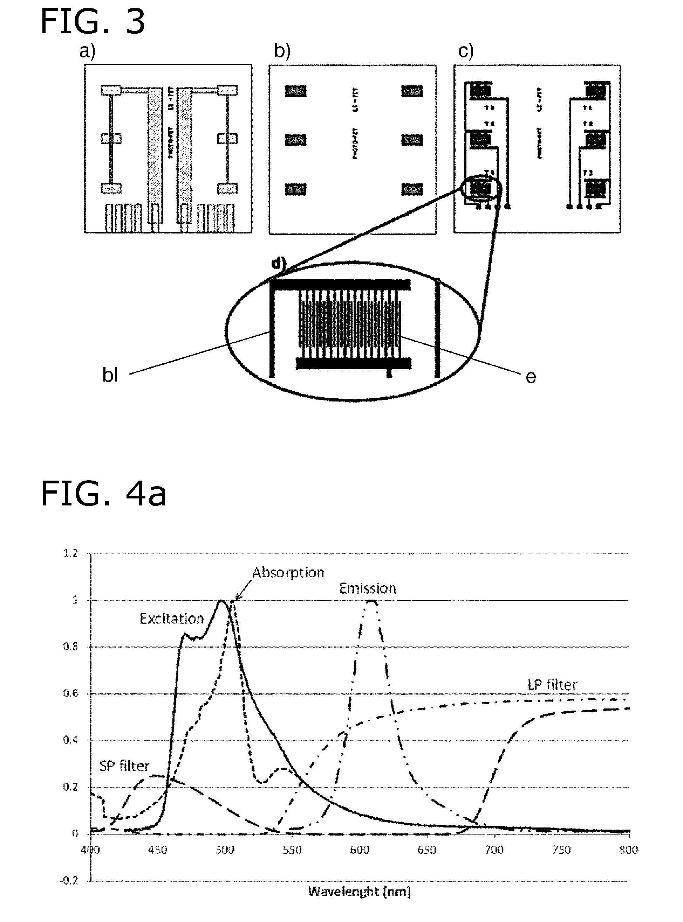

The plurality of light detectors for all reference and detection chambers 21, 23 can be integrated in a single substrate, as can be seen in figure 3. The light detectors could either be two-terminal devices such as organic photodiodes (OPDs) or three terminal devices such as light-sensitive transistors (LS-FETs). In case of an OPD the light-detector array could have a common anode and individual cathodes. In case of LS-FETs the individual transistors may have common source and common gate, but individual drain connections. This helps to reduce the number of interconnects and the complexity of the device. The key requirement of the light detector is high sensitivity and low dark noise.

In figures 3 an example of mask layout for the fabrication of LE-FET devices is shown. Figure 3a) shows a mask for transparent ITO gate structure, while figure 3b) shows an evaporation mask for the semiconductor. Figure 3c) shows the evaporation mask for the source-drain structures for contacting the LE-FET device with an appropriate electronics. The bus lines bl and the inter-digitated finger electrodes e are shown. Figure 3d) depicts a close-up of a single LE-FET element.

Both the short-pass filter SP and the long-pass filter LP are of crucial importance in this head-on geometry. The light-source module 3 and detector module 1 are operated either in continuous or pulsed mode. The pulsed mode is preferred in terms of noise.

The architecture of the point-of-care testing device 0 is suitable for but not limited to the detection of fluorescent or phosphorescent markers in bio-assays such as immune-assays. The head-on geometry has the advantage of mechanical and optical simplicity. The challenge, however, is to block the excitation light from entering the detector module 1 efficiently enough such that the leakage light is much lower than the actual fluorescent signal. Efficient filtering both on the excitation side S and the detector side D or emission side is absolutely crucial for the functioning of the device 0. The wavelength characteristics of light-source, filters and fluorophors need to be tuned precisely. Figure 4a shows the wavelength characteristics of a possible embodiment.

The solid line shows a typical excitation spectrum of an organic light source. The spectrum of the light source overlaps well with the absorption spectrum of the fluorescent marker (short dashed line). The emission of the fluorescent marker (dash double dotted line) shall have a large Stokes-shift to simplify the filtering. The short pass filter SP (long dashed line) and long pass filter LP (dash dot line) are arranged in such a way that the excitation and the emission wavelength can pass the SP and LP filters, respectively.

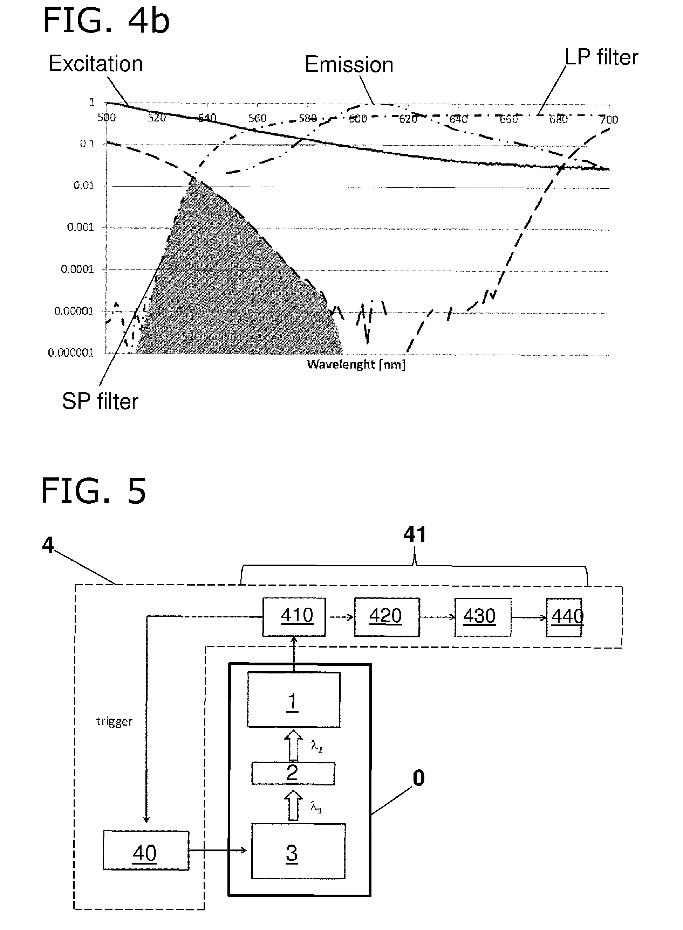

Both SP and LP filter should feature low auto-fluorescence. SP filter with high extinction is required to cut-off the long-wavelength tail of excitation. LP filter with high extinction is required to filter out the excitation light. Figure 4b) shows the critical area where the SP and LP filter transmission curve overlap (shaded area) in logarithmic scale.

The shaded area should be minimized in order to minimize the leakage light from the excitation source (solid line). If not properly taken care of, light leakage can easily exceed the light level of the fluorescence.

An embodiment of a point-of-care testing device 0 connected to an electronics 4 is displayed in figure 5 in form of a functional diagram. The electronics 4 comprises an excitation electronics in form of a light source driver 40 and a detection electronics 41 with a signal amplifier 410, an A/D converter 420, a data analysis module 430 and a human machine interface 440. A light-source module 3, comprising an array of light sources suitable for integration is driven by the light source driver 40. The excitation electronics can be operated in pulsed or steady mode. Steady state leads to potentially simpler electronics; pulsed operation leads to less noise, but also requires faster response light-source chips 3 and detector chips 1. The pulsed mode is clearly preferable in terms of signal-to-noise ratio. Since the signals to be detected are so low, the electronics should be optimized in such a way in order to minimize electronic noise.

The light source module 3 emits light at the wavelength λ₁ after passage of the short-pass filter SP, which excites the fluorescent markers inside the detection chamber 23 of the microfluidic chip 2. The fluorescent emission is shifted to the wavelength λ₂. The fluorescence is filtered by a LP filter before it is detected by a light-detector array in the detector module 1 suitable for integration. The signal current is then amplified and converted into a voltage signal by means of the signal amplifier 410. Due to the weak fluorescent signal a high amplification is needed. The most meaningful possibilities are trans-impedance amplifier on one hand and integrating amplifiers on the other hand.

Lock-in amplifiers are a possibility but are not really required if good light-shielding is available and are complex to be combined with integrating amplifiers. Integrating amplifiers are the preferred solution. They are synchronized with the pulsed light source driver by sending an electronic trigger signal. The integrating amplifier 410 is spatially located in close proximity to the detector array in order to reduce the electronic noise picked up by the connection lines. By integrating the charges during a pulse extremely high gains exceeding 1E7 can be obtained, while keeping the electronic noise down. Such high amplifier gains are required because of the low marker concentrations to be detected. The amplified voltage is then digitized by the A/D converter 420, for example a high dynamic range and low noise A/D converter 420 or data acquisition module. The measured data is analyzed in the data analysis module 430, normalized and displayed on the human-machine interface or HMI 440.

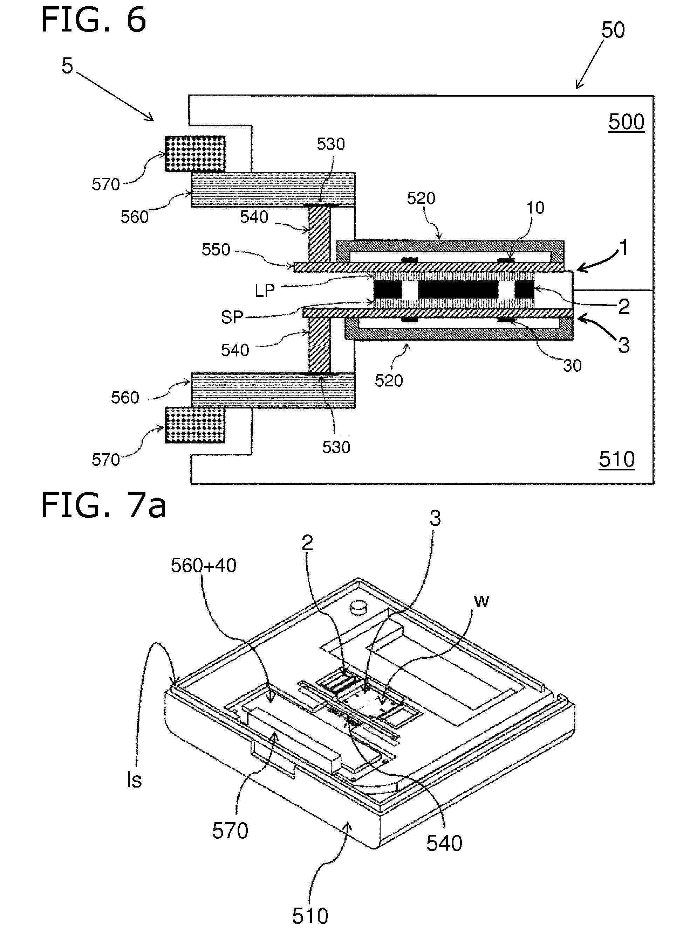

The following embodiment shows a potential implementation of the point-of-care testing device 0 in a reader device 5, see figure 6, while an appropriate electronics is located separately and not depicted. The reader device 5 comprises a device holder 50 with a top part 500 and a bottom part 510. Such a device holder 50 could be injection molded from plastic. It consists of recesses that accommodate the microfluidic chip 2, the light-source module 3 and the detector module 1, in order to receive the point-of-care testing device 0. The light-source module 3 comprises a multiplicity of thin-film light-sources 30 processed on a rigid glass or a flexible plastic substrate. The light-sources 30 could either be a two-terminal device such as an organic light emitting diode or a three-terminal device such as a light-emitting field-effect transistor.

The thin film light sources 30 and the thin-film light detectors 10 are protected with a cover glass 520 and a glue frame from the ambient atmosphere and can be provided with getters to ensure appropriate shelf-life. The individual devices 1, 10, 3, 30 can be addressed through interconnecting conductive lines and contact pads. Such contact pads are usually made of evaporated or sputtered metal layers or of transparent conductive oxides such as Indium Thin Oxide. These pads are interconnected to gold contact pads 530 situated opposed on the printed circuit boards 560 (PCB) by means of a highly anisotropic conductors 540, for example a Zebra connector. In a preferred embodiment these Zebra connectors 540 are made of gold wire that are wrapped around an elastomeric zylinder which is then sliced in half in order to reduce the contact resistance.

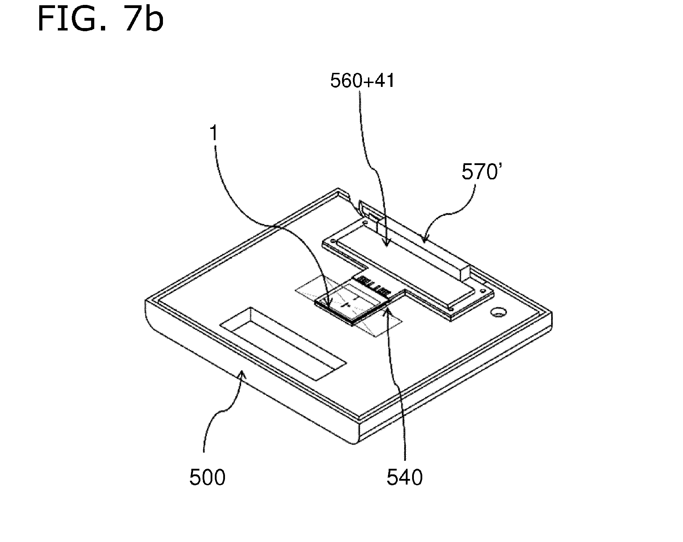

In Figure 7a a bottom part 510 of a reader with an integrated point-of-care device 0 and integrated light source driver 40. The bottom part 510 holds the excitation electronics in form of the light source driver 40, the short-pass filter SP, the light source module 3 with an array of thin-film integrated light-sources 30 and the microfluidic chip 2. The excited light is emitted through a microfluidic window w, in order to excite the fluorescent markers inside the microfluidic chip 2, the fluorescence of which then enters the detector module 1. The light source driver 40 is connected to printed circuit boards 560, to be easily cabled to external electronics, which are independent from the reader 5. The bottom part 510 is formed to match with the top part 500, depicted in figure 7b. A connector block 570 is attached to the bottom part 510.

The top part 500 contains the detection electronics 41 connected to the printed circuit board 560, the detector module 1 with an array of thin-film integrated light-detectors 10 and the long-pass filter LP. The printed circuit boards 560 are T or L-shaped in order to allow it to go between the inlet 20 and outlet 24 of the microfluidic chip 2. In order to reduce background light and in order to operate the device in ambient light conditions it is necessary to have light-shielding Is, which is disposed circumferential at the edge of the top part 500 and/or the bottom part 510. The light-shield Is is located here at the bottom part 510 surrounding the edge of the bottom part 510, which can be coupled with the edge of the top part 500 edge. Therefore a recess is formed in the top part 500.

The excitation electronics and the detection electronics 41 are connected to the outside by means of cable channels.

The point-of-care testing device 0 will be distributed as a unit, which is disposable, due to the easy and cheap fabrication. If the point-of-care testing device 0 is integrated in a reader 5 with or without integrated electronics, the point-of-care testing device 0 can be easily inserted into the reader 5 and is depending on the embodiment be hold exchangeable. Because of the device holder 50 made of plastics, even the device holder 50 is disposable and can be replaced.

In a preferred embodiment light sources and/or detectors with a thickness below 1 millimeter are used, in order to reach compact space saving point-of-care testing devices 0.

Alternatively to the directly coupling of the light source module 3 to the microfluidic chip 2, arranged in a gapless manner, the light source module 3 could be coupled by light guiding means to the microfluidic chip 2. The light is indirectly fed from the light source module 3 through the light guiding means, for example waveguides and grating couplers into the reference chamber 21 and detection chamber 23 of the microfluidic chip 2.

The work leading to this invention and application has received funding from the European Union Seventh Framework Programme (*FP7*/*2007-2013)* under *grant agreement* n° 248052.

### LIST OF REFERENCE NUMERALS

0 point-of-care testing device / POCT device
1 detector module
   10 Thin-film light detector
   LP long-pass filter /LP filter
   11 sealing tape
2 microfluidic chip
   20 inlet
   21 reference chamber
      A reference area
   22 fluidic channel
   23 detection chamber
      B detection area
   24 outlet
      w microfluidic window
3 light source module
   30 Thin-film light source
   SP short-pass filter /SP filter
   31 sealing tape
      S excitation side D detector side
4 electronics
   40 light source driver (pulsed)
   41 detection electronics
      410 signal amplifier
      420 A/D converter
      430 Data Analysis module
      440 HMI / human machine interface
5, 5' reader with integrated point-of-care testing device
   50 device holder
   500 top part
   510 bottom part
   520 cover glass
   530 gold pad
   540 highly anisotropic conductor / Zebra connector
   550 substrate (glass)
   560 printed circuit boards / PCB
   570 connector block
   bl bus lines
   e inter-digitated finger electrodes
   Is light-shield

## Claims

1. Point-of-care testing device (0), comprising a detector module (1), a microfluidic chip (2) and a light source module (3) in a sandwich geometry, while light of the light source module (3) can be emitted from an excitation side (S), passing the microfluidic chip (2) and finally entering the detector module (1) at a detector side (D),
**characterized in that**
the light source module (3) comprises at least one optical short-pass filter (SP) facing a first surface of the microfluidic chip (2) on the excitation side (S) and
the detector module (1) comprises at least one optical long-pass filter (LP) facing a second surface of the microfluidic chip (2) on the detector side (D).

2. Point-of-care testing device (0) according to claim 1, **wherein** on the first surface of the microfluidic chip (2) on the excitation side (S) and/or on the second surface of the microfluidic chip (2) on the detector side (D) a sealing tape (11, 31) is attached, sealing a reference chamber (21), a fluidic channel (22) and a detection chamber (23) recessed in the microfluidic chip (2) sealing against the environment.

3. Point-of-care testing device (0) according to claim 1, **wherein** at least one thin-film detector (10) and at least one thin-film light source (30) are used, forming together with the long-pass filter (LP) and the short-pass filter (SP) a thin and planar detector module (1) respectively light source module (3).

4. Point-of-care testing device (0) according to claim 1, **wherein** the light source module (3) and the detector module (1) are attached and coupled to the microfluidic chip (2) in a gapless way.

5. Point-of-care testing device (0) according to claim 1, **wherein** the light source module (3) and the detector module (1) are coupled to the microfluidic chip (2) spatially disposed at a distance, while the light is coupled by light guiding means.

6. Point-of-care testing device (0) according to one of the preceding claims, **wherein** the short-pass filter (SP) is monolithically integrated in the light source module (3) and/or the long-pass filter (LP) is monolithically integrated in the detector module (1).

7. Point-of-care testing device (0) according to claim 1, **wherein** the optical density of the short-pass filter (SP) and the long-pass filter (LP) is minimum about 6 in the long-wavelength and short-wavelength blocking range, respectively.

8. Point-of-care testing device (0) according to claim 3, **wherein** the thickness of the at least one thin-film detector (10) and/or the at least one thin-film light source (30) is below 1 millimeter.

9. Point-of-care testing device (0) according to claim 3, **wherein** the used at least one thin-film light source (30) and/or the at least one thin-film detector (10) is a three terminal device such as light-emitting transistor (LE-FET) respectively light-sensitive transistors (LS-FET).

10. Point-of-care testing device (0) according to claim 3, **wherein** the used at least one thin-film light source (30) and/or the at least one thin-film detector (10) is a two-terminal device such as an organic light-emitting diode (OLED) respectively an organic photodiode (OPD).

11. Reader (5) for detection of fluorescent or phosphorescent markers with an integrated point-of-care testing device (0) according to one of the preceding claims, **wherein** the point-of-care testing device (0) is held in a device holder (50), comprising a top part (500) and a bottom part (510).

12. Reader (5) according claim 11, **wherein** the top part (500) and the bottom part (510) are shielding the integrated point-of-care testing device (0) against ambient leakage light by means of a light shield (Is), which is disposed circumferential at the edge of the top part (500) and/or the bottom part (510).

13. Reader (5) according claim 11, **wherein** the integrated point-of-care testing device (0) can be accessed by an external electronics (4) via connector blocks (570) and printed circuit boards (560), without opening the device holder (50).

14. Use of a point-of-care testing device (0) according to one of the claims 1 to 10 in reader (5), **wherein** the reader (5) comprises a device holder (50) with a light-shield (Is) surrounding the integrated point-of-care testing device (0).
